# EUROPEAN PATENT APPLICATION

(11) **EP 3 656 469 A1**
(43) Date of publication of application: **27.05.2020**
(21) Application number: 18835764.4
(22) Date of filing: 09.06.2018
(51) Int. Cl.: B01J 20/06, B01J 20/26, B01J 20/32

(54) **HYBRID SORBENT**

(30) Priority: 17.07.2017 RU 2017125453
(71) Applicant: Electrophor, Inc., Woodmere NY 11598 (US)
(72) Inventor: VASIL'YEVA, Evgeniya Sergeyevna, St.Petersburg 192236 (RU); MITILINEOS, Aleksandr Gennadievich, St.Petersburg 195220 (RU); KAZAKEVICH, Yuriy Evgenievich, St.Petersburg 198261 (RU); REMIZOVA, Iuliia Anatolievna, pos.Kudrovo Leningrad region 188691 (RU)
(74) Representative: Danubia Patent & Law Office LLC
(86) International application number: PCT/RU2018/000386
(87) International publication number: WO 2019/017816

(57) **Abstract**

A hybrid sorbent on the base of an anion-exchange polymeric matrix with HFO for selective sorption of arsenic wherein HFO exists in the matrix as particles, the majority of which is amorphous ferrihydrite and the portion of the amorphous ferrihydrite is not less than 80%, preferably is more than 90% of the total mass of HFO.

The object of the invention and the technical result achieved with the use of the invention is to develop a novel hybrid sorbent with HFO with increased sorption kinetics for two arsenic forms, As(III) and As(V), simultaneously.

## Description

The invention is from the field of hybrid sorbents for removal of arsenic compounds from water and is intended for water purification devices.

In many countries due to the lack of surface water sources ground waters are used instead. When ground waters are used as the source of water there is a problem of arsenic contamination, which is typical for about 20 countries, for example the USA and Chile. On the territory of Russia there are several regions where ground waters contain arsenic, for example Transbaical, Stavropol, Perm, Khabarovsk, republic of Tuva, Magadan and Pensa region and also republic of Dagestan. Arsenic, contained in water, leads to development of cancer and to dermatophytid. Arsenic is contained in water as arsenous compounds (from now on - As(III)), for example, arsenites and arsenous acid and arsenic compounds (from now on - As(V)), for example, arsenates. From the state of the art sorbents for dearsenication are known. A material containing ferric oxides, ferric hydroxides and oxyhydroxides (from now on - HFO) in different ratios is frequently used. According to component ratios, different variants of HFO with different properties are known.

Sorbents from the state of the art are produced when HFO particles are distributed in inert polymeric material or in polymeric material containing ion exchange groups for iron ions fixation. HFO addition into polymeric material is made, for example, by mechanic dispersion of HFO particles in material or by creation of HFO particles directly in polymeric material through the formation of intermediate structure in material with further HFO particles sedimentation. Such kinds of sorbents are called hybrid sorbents.

A hybrid sorbent for arsenic removal according to US Patent No. 4,576,969 (published: 18.03.1986, priority date: 13.10.1983, INC: C08D 5/20, C08F 8/10, applicant: Unitika Ltd (Japan)) is known from the state of the art. The hybrid sorbent is ion-exchange phenolic resin with metal oxide fixed in its structure. The hybrid sorbent is produced in the following way. In the first stage, the phenolic resin precondensation is done. While the resin is still in viscous flow state, a salt or metal oxide is added to it, for example sulphate, hypochlorite, nitrate, acetate, of iron, aluminium, zinc and etc. Then the condensation reaction takes place to fix oxide or metal salt in the resin structure. For example carbon tetrachloride, chloroform or dichloromethane can be used as a reaction medium. After condensation, the derived material is separated from the media and then an alkylating material is added, for example, alkali hydroxide or sodium carbonate. Structure of the derived hybrid sorbent is crosslinked phenolic resin with polyvalent metal hydroxide fixed therein. The sorbent has low swelling degree, high durability, the sorbent granules have very few cracks and hardly deform.

According to US Patent No. 4,576,969, sorption capacity of the derived hybrid sorbent for arsenic is 33 mg/g at very low water flow velocity through the material (250 ml/h), and that is very ineffective. Such low velocity may be explained that this derived hybrid sorbent has ultradense structure, which complicates the water flow. Low water flow velocity through the sorbent significantly narrows its field of utilization only to laboratory experiments, as such velocities are not suitable in the industry scale. As phenol and formalin are used during hybrid sorbent production, it cannot be used for drinking water production. Even residual contents of these two agents in the resin can be washed into the filtering water while it flows through the layer of sorbent and this is forbidden for drinking water.

A hybrid sorbent for arsenic removal according to US Patent Appl. No. 2011/0056887 (published: 10.03.2011, priority date: 08.09.2009, INC: C02F 1/42, C02F 103/06, C02F 103/02, C02F 103/10, C02F 101/10, applicant: LANXESS DEUTSCHLAND GMBH (DE); LANXESS CORPORATION (US)) is known from the state of the art. The hybrid sorbent is a macroporous monodisperse anion-exchange material with HFO spread on it. The sorbent is intended mostly for removal of arsenic such as H₂AsO₄⁻, H₂AsO₄⁻, HAsO₃²⁻ , ASO₄³⁻, H₃AsO₃, H₂AsO₃⁻, HAsO₄²⁻, HAsO₄²⁻ from water and water solutions. The iron(III) content in the sorbent is 16% (by mass).

HFO is spread on the anion-exchange material in the following way. At room temperature and constant stirring, deionized water is added to the anion-exchange material. After that iron(III)-sulphate is added to the obtained suspension, the stirring continues for 90 minutes. After that an aqueous solution of sodium hydroxide is added to the mixture, till the pH of it reaches 7. Then an aqueous solution of sodium chloride is added to the derived mixture and the stirring continues for 30 minutes. Solid phase is separated from the suspension and this solid state is the final product.

The hybrid sorbent according to US Patent Appl. No. 2011/0056887 has low sorption capacity for arsenic ions As(III) and As(V), so the hybrid sorbent can be used for water and water solutions where the arsenic concentration is no more than 10 mg(As)/1.

A hybrid sorbent for arsenic removal according to US Patent No. 7,811,360 (published: 12.10.2010, priority: 25.09.2001, INC: B01D 53/04, applicant: LANXESS Deutschland GmbH (DE)), is known from the state of the art. The sorbent consists of HFO, in particular, of oxihydroxide goethite α-FeO(OH), in elongated granules or short fibers.

Three variants of the sorbent are given in this patent: sorbent 1, sorbent 2 and sorbent 3 - and three methods of their production, too.

Sorbent 1 consists of 100% geothite α-FeO(OH) and is in the form of agglomerates of short elastic fibers with a diameter of 30 to 50 nm and length of 0,2 to 2 mm with high mechanical properties, resistance to compaction, hydraulic tension and wear and tear.

Sorbent 1 is produced by the following method. Ferrous(II) sulphate FeSO₄ is dissolved in water and the obtained solution is cooled to 14°C. Then magnesium sulphate MgSO₄•7H₂O is added to the solution. The solution is then homogenized at the solution temperature of 14°C. Then sodium hydroxide is added to the solution and is oxidized by air oxygen bubbling, till precipitation takes place, the sediment contains 99,5% geothite. The sediment is decanted and pressed. The sediment mass is pressed on metal presses with 7 mm holes to form elongated granules or short fibers of final sorbent. Sorbent fibers are dried on a belt drier to a residual moisture of 3%.

Sorbent 2 consists of geothite α-FeO(OH) and magnesium hydroxide Mg(OH)₂. The sorbent consists of short fibers, grouped into agglomerates, fibers are connected with each other by amorphous layers.

Sorbent 2 is produced by the following method. 50 g/l of suspension containing HFO hydroxide geothite α-FeO(OH) is added to MgSO₄ aqueous solution. After that sodium hydroxide is added to the solution under continued stirring for 15 minutes. Suspension is rinsed on a nutsch filter, till specific conductivity of the solution reaches 1 mSm/sm, the sediment is dried in a desiccator at 75°C to a residual moisture of 3%.

Sorbent 3 is 100% geothite α-FeO(OH) in the form of very short needle-shaped crystals, gathered in dense agglomerates. The specific surface area is 102 m²/g.

Sorbent 3 is produced by mixing of aluminium sulphate Al₂(SO₄)₃ solution with geothite α-FeO(OH) in a sodium hydroxide solution with further sediment decanting, further rinsing and drying of the sorbent to a residual moisture not more than 2%. The size of needle-shaped crystals ranges from 0.5 to 2 mm.

The main drawback of sorbent of US Patent No. 7,811,360 is the low degree of arsenic As(III) and As(V) removal - not more than 50% for each arsenic type and low arsenic As(III) and As(V) kinetic of sorption.
Kinetic of sorption of sorbent 1:
   As(III) for example NaAsO₂ concentration 2.5 mg/l is 1.8 mg(As³⁺)/g(FeO(OH))•h;
   As(V) for example Na₂HAsO₄ concentration 2.9 mg/l is 1.5 mg(As⁵⁺)/g(FeO(OH))•h.
Kinetic of sorption of sorbent 2:
   As(III) of NaAsO₂ concentration 2.6 mg/l is 1.2 mg(As³⁺)/g(FeO(OH))•h;
   As(V) ofNa₂HAsO₄ concentration 2.7 mg/l is 1.5 mg(As⁵⁺)/g(FeO(OH))•h.
Kinetic of sorption of sorbent 3:
   As(III) of NaAsO₂ concentration 2.6 mg/l is 2.0 mg(As³⁺)/g(FeO(OH))•h;
   As(V) of Na₂HAsO₄ concentration 2.1 mg/l is1.5 mg(As⁵⁺)/g(FeO(OH))•h.

Thus, the sorbent is not effective enough for the removal of arsenic ions As(III) and As(V).

A hybrid sorbent for arsenic removal according to US Patent No. 7,807,606 (published: 05.10.2010, priory date: 04.09.2003, INC: B01J 21/04, assignee: Battelle Energy Alliance, LLC (US)) is known from the state of the art. The hybrid sorbent is a polymeric matrix with HFO spread on it. Polyacrylonitrile (from now on - PAN), a homopolymer of acrylonitrile or copolymer, containing at least 40% of acrylonitrile units is used as the polymeric matrix. US Patent No. 7,807,606 discloses said hybrid sorbent and two methods of its production.

In the first method of HFO production, ferric oxide Fe₃O₄ or Fe₂O₃ is dissolved in concentrated nitric acid. After that PAN is added to the solution, till its content is from 3 to 5%, then the solution is stirred. Then the derived solution is spread through air nozzles into sodium hydroxide solution. When drops of solution flow into the alkali, they immediately set solid, and solid granules of sorbent are formed. Solid granules of derived sorbent are taken out of alkali bath, rinsed with ethanol and dried at a temperature of about 60°C. After this, the granules are crushed into homogeneous fraction of granulated sorbent. The thus obtained sorbent may contain iron(III) in the amount of 30% to 70%.

According to the second method, HFO is dissolved in dimethyl sulfoxide (from now on - DMSO), and after all the HFO particles are totally dissolved, PAN is added to the solution. the ratio of PAN:HFO is about 1:5, respectively. Dissolving of PAN is done at 90°C and constant stirring, till all the PAN fibers are dissolved. After that the temperature is gradually decreased to 40°C. Then the solution is spread through air nozzles into the bath with cold deionized water. When spreading the solution with particles of PAN with HFO in DMSO, DMSO goes from the solution into the deionized water and solid granules of hybrid sorbent are formed. After this, the derived solid particles of the sorbent are additionally rinsed with water under continuous stirring within 30 minutes in order to remove residual DMSO. Then the derived sorbent granules are dried under 40°C. The obtained granulated sorbent with HFO contains approximately 85% HFO and 15% PAN.

The sorbent granules have macroporous structure and good mechanical properties.

The hybrid sorbent derived according to both methods may contain HFO from 10% to 85% and PAN from 10% to 90% of total weight of the sorbent. HFO in the hybrid sorbent is present in the form of iron(III) in elementary form, iron hydroxide, iron oxihydroxides and iron oxides. General content of iron in hybrid sorbent may be from 250 to 700 mg/g.

The sorption capacity of hybrid sorbent for As(V) is from 7.5 to 10 mg/g.

The hybrid sorbent of US Patent No. 7,807,606 has the following drawbacks. First of all, it is of low sorption capacity for As(V), and also the absence of the evidence of the claimed sorption capacity for As(III) ions. The above mentioned HFO compounds have crystal structure and so their sorption capacity is low.

Significant drawback of the hybrid sorbent, derived by the method described in the patent, is the dissolution of PAN, as a consequence of which the PAN fiber loses its regularized structure and properties. Also, PAN in the form of fiber to be dissolved into liquid phase to form granules afterwards is not practical.

Also to produce the hybrid sorbent of US Patent No. 7,807,606, PAN is used which does not possess anion-exchange properties. So the described hybrid sorbent is a mechanical mixture of PAN and HFO complex. The absence of anion-exchange groups in the carrier material (PAN) points that cations of iron(III) cannot connect to PAN and the described sorbent is a uniform mixture of HFO particles distributed mechanically between PAN which is the significant drawback of the sorbent. Hence, because of the absence of ion-exchange groups, the sorption of heavy metals is impossible.

A hybrid sorbent for arsenic removal derived according to the method described in US Patent Appl. No. US 2007/0241057 (published: 18.10.2007, priory date: 11.04.2006, INC: B01J 20/26, assignee: Lanxess Corporation (US)) is known from the state of the art.

To produce the sorbent, an anion-exchange polymeric matrix on the base of aromatic hydrocarbons, for example, polyvinyl is used. Aromatic hydrocarbon, initiating agent and porogen to make anion-exchange polymeric matrix macroporous are added into the mixture of the anion-exchange polymeric matrix. After the anion-exchange polymeric matrix has been derived, a solution of iron(II)-salt or iron(III)-salt, which are not capable for complex formation, for example dissoluble iron(III) chlorides, or, for example, air oxygen is added.

After this, a solution of the compound which leads to HFO formation, for example, alkali hydroxide is added. The derived material is put on sieve to remove the extra liquid and is rinsed by distilled water.

According to US Patent No. 7,407,587 (published: 05.08.2008, priority: 24.03.2006, INC: C01B 31/08, C02F 1/42, assignee: Layne Christensen Company (US)), a hybrid sorbent on the base of anion-exchange resin with HFO and a method of its production is known.

The method is the following. The anion-exchange resin is treated with iron(III)-salt with the further addition of alkali solution to the derived material and the final rinsing of the derived material with distilled water. The iron salt and alkali treatment may be done, at least, in two steps with rinsing between them. In the step of anion-exchange resin treatment by iron salt solution the rinsing is done by sodium chloride, enriched with carbon dioxide, after alkali treatment the rinsing is done by distilled water. Iron(III) chloride, nitrate, acetate may be used as iron(III)-salt.

In the end, HFO particles irretrievably fixed on the surface and in pores of anion-exchange resin are formed in the hybrid sorbent produced by the following method.

In US Patent No. 7,407,587 hybrid sorbent produced by the method described above is capable for sorbing anions, containing arsenic As(V), from water. Sorption degree for arsenic As(V) anions increases with the increase of amount of iron in hybrid sorbent. The optimal value of pH of solution for maximum arsenic As(V) removal is 6.

The drawback of the invention according to US Patent No. 7,407,587 is that the hybrid sorbent is not capable for sorbing As(III) compounds. It should be noted that the size and porosity of HFO particles depend on their formation speed. When alkali hydroxide directly interacts with iron chloride the exchange reaction is nearly immediate, and that leads to a quick sedimentation of iron hydroxide and formation of big particles with low porosity. This limits sorbent utilization as the less the porosity, the smaller the effective surface area of the sorbent is, and the higher amount of sorbent to purify the given volume of water is needed. So the liquid purification device has to be large enough, and it is inconvenient for water purification of water especially in everyday life.

According to US Patent No. 7,291,578 (published: 06.11.007, priority: 21.01.2004, INC: B01J 20/26, assignee: Arup SenGupta (US)), a hybrid sorbent on the base of anion-exchange polymeric matrix with HFO for selective removal of impurities from liquids and a method of sorbent production is chosen by the Applicant as the closest analogue. The method of anion-exchange polymeric matrix is the following. An anion-exchange polymeric matrix is enriched, for example, with potassium permanganate or sodium hypochlorite and is rinsed. Then the derived material is treated with iron(II)-salt. The oxidation reaction of iron(II) to iron(III) with the transfer to HFO form and anion-oxidizer reduction take place. So the HFO particles are formed and fixed in the anion-exchange polymeric matrix structure. Then, the anion-exchange polymeric matrix with HFO is rinsed and dried.

The Applicant examined the sorbent claimed in US Patent No. 7,291,578. Drawbacks of the sorbent and a comparative analysis of the closest analogue sorbent and the claimed sorbent are given in Table 1. The drawback of the closest analogue is low sorption capacity for arsenic compounds.

The object of the invention and the technical result achieved with the use of the invention is to develop a novel hybrid sorbent with HFO with increased sorption kinetics for two arsenic forms, As(III) and As(V), simultaneously.

The problem to be solved and the claimed technical result when using this invention are achieved by the hybrid sorbent on the base of anion-exchange polymeric matrix with HFO for selective arsenic sorption, where HFO is in the matrix in the form of particles which mostly are amorphous ferrihydrite, the fraction of which is not less than 80% by mass, predominantly more than 90% by mass of the total weight of HFO. HFO particles have microporous structure and their size ranges from 5 to 500 nm, the polymeric matrix may be macroporous fibrous and/or granulated material. The content of anion-exchange groups in polymeric matrix is not less than 6.0 mmol/g.

### Brief description of drawings

Figure 1. Electronic microphotography of the initial anion-exchange polymeric fiber (1a). Electronic microphotography of the hybrid sorbent on the base of anion-exchange PAN-fiber with HFO (1b).
Figure 2. Mossbauer spectrum of the sample of hybrid sorbent on the base of anion-exchange PAN-fiber with HFO, described in example 1.
Figure 3. Mossbauer spectrum of the sample hybrid sorbent of US Patent No. 7,291,578.
Figure 4. Sorption kinetic diagram for arsenic As(III) by hybrid sorbent with HFO on the base of PAN-fiber, described in example 1, sorption kinetic diagram for arsenic As(III) by hybrid sorbent with HFO on the base of PAN-fiber and ion-exchange resin, described in example 3 and sorption kinetic diagram for arsenic As(III) by hybrid sorbent of US Patent No. 7,291,578 (trade name F036), chosen by the applicant as the closest analogue.
Figure 5. Sorption kinetic diagram for arsenic As(V) by hybrid sorbent with HFO on the base of PAN-fiber, described in example 1, sorption kinetic diagram for arsenic As(V) by hybrid sorbent with HFO on the base of PAN-fiber and ion-exchange resin, described in example 3 and sorption kinetic diagram for arsenic As(V) by hybrid sorbent FO36 of US Patent No. 7,291,578, chosen by the applicant as the closest analogue.

The claimed hybrid sorbent is an anion-exchange polymeric matrix with HFO fixed in it. At the same time HFO on hybrid sorbent comprises at least 90% of amorphous ferrihydrite and less than 10% of iron-containing impurities, forming complex of HFO compounds. HFO is microporous particles with a size that ranges from 5 to 500 nm, formed and fixed directly inside of the micropores of the anion-exchange material after changeable iron(III) complexes are destructed when treated with alkali metal.

Fibrous or granulated material or their mixture can be used as the anion-exchange material.

The anion-exchange polymeric matrix may be granulated anion-exchange resin with secondary or tertiary amine groups or anion-exchange polymeric fibers with secondary or tertiary amine groups, and/or mixture of resin and fibers, and the anion-exchange group content in the polymeric matrix is not less than 6.0 mmol/g.

The complex salt can be a complex iron salt, where ligands are oxalate, salicylate, citrate or tartrate. Sodium or potassium hydroxide may be used as alkali hydroxide.

A production method of the hybrid sorbent with HFO is the following. The solution of a complex salt, wherein the central ion is the cation of iron(III) and the anions of carbon salts are ligands, is prepared. The obtained solution is added to the anion-exchange polymeric matrix for sorption of complex anions on the matrix. After that the derived provisional structure is treated with alkali hydroxide solution till hybrid sorbent is formed, which is then rinsed with water.

The provisional structure is derived during a reaction between anion-exchange groups of polymeric matrix with anion of complex salt. When the provisional structure is treated with alkali hydroxide, the unstable complex - amorphous ferrihydrite - in the phase of anion-exchange polymeric matrix is formed with its further degrading. As the formation and degrading of the complex takes place in the solution, the degrading is slow, that helps HFO to form on different parts of polymeric matrix separated from each other, so the HFO particles are finer. In such conditions during alkali hydroxide removal HFO structure consolidates more slowly, providing big amount of micropores in HFO particles. Sorption properties of HFO particles, as well as their composition, depend on their size and porosity. The smaller the size of the particles and the higher their porosity, the bigger the contact area of the sorbing compound with HFO surface is, and thus the bigger the sorption capacity is. The bigger the sorption capacity, the less amount of sorbent to purify a given volume of water is required, that widens the opportunities of sorbent's practical use.

According to the given invention, the hybrid sorbent has high sorption properties for arsenic compounds of two forms As(III) and As(V), in particular, for oxo anions in wide range of pH, arsenate ions and non-dissociated arsenites. At the same time, the hybrid sorbent is capable for effective sorption of toxic anions of chromium Cr(VI), and also cations and hydroxocations of copper and lead. The hybrid sorbent has high sorption kinetics that increases the linear velocity of water flow in sorption column. This is important for practical use, as it helps to provide the filtration velocity convenient for the user without efficiency loss.

### Examples of hybrid sorbents according to claimed invention

### Example 1:

Base - macroporous fiber material - anion-exchange on the base of PAN-fiber with anion exchange group content of 8.6 mmol/g.

The ferrihydrate content in the hybrid sorbent is 98% by mass.

The particle size of HFO, in particular, ferrihydrate is - from 80 to 140 nm.

Iron(III) content in the hybrid sorbent - 63 mg of iron to 1 g of sorbent.

Sorption capacity for As(V) - 32 mg/g (at pH 7).

Sorption capacity for As(III) - 30 mg/g (at pH 7).

Sorption kinetics for As(V) - semi-sorption time is less than 1 minute.

Removal kinetics for As(III) - semi-sorption time is 1 minute.

Sorption capacity for Cr(VI) - 250 mg/g (at pH 7).

Sorption capacity for Cu - 240 mg/g.

Sorption capacity for Pb - 360 mg/g.

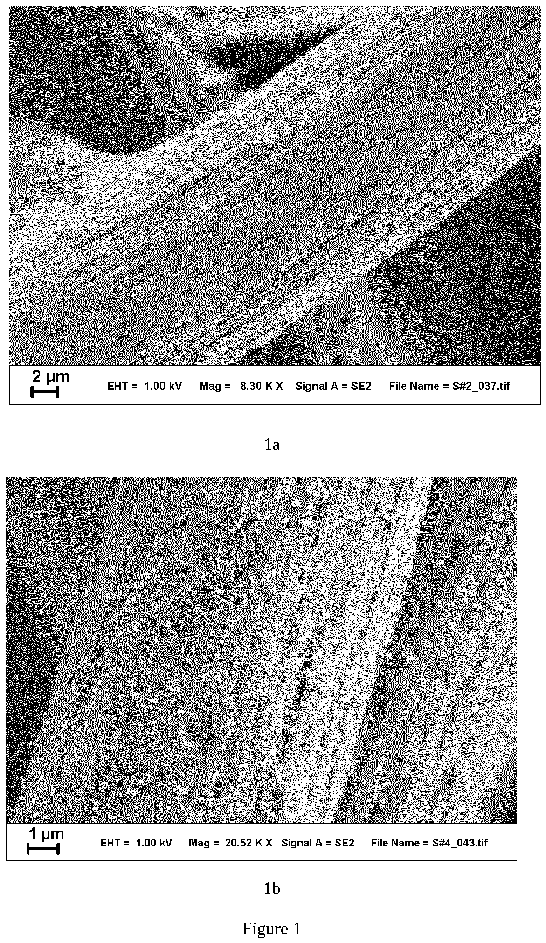

Electronic microphotography of initial anion-exchange polymeric fiber (1a), used to produce the hybrid sorbent of example 1 is given in figure 1. In the second electronic microphotography (1b), the hybrid sorbent on the base of anion-exchange polymeric fiber with HFO, produced according to method, described in claimed method, is given. In the microphotography (1b) particles HFO are sharply visible on the fiber surface.

### Example 2:

Base - macroporous granulated material - anion-exchange resin.

The ferrihydrate content in hybrid sorbent is 92% by mass.

The particle size of HFO, in particular, ferrihydrate - from 50 to 120 nm.

Anion-exchange groups content in the hybrid sorbent - 9 mmol/g.

Iron(III) content in the hybrid sorbent - 72 mg/g.

Sorption capacity for As(V) - 44 mg/g (at pH 7).

Sorption capacity for As(III) - 34 mg/g (at pH 7).

Removal kinetics for As(V) - semi-sorption time 25 minutes.

Removal kinetics for As(III) - semi-sorption time 30 minutes.

Sorption capacity for Cr(VI) - 300 mg/g (at pH 7).

Sorption capacity for Cu - 270 mg/g.

Sorption capacity for Pb - 180 mg/g.

### Example 3:

Base - mixture of macroporous fiber and granulated material with a ratio of 1:8, respectively. The ferrihydrate content in the hybrid sorbent is 93% by mass.

The particle size of HFO, in particular, ferrihydrate - from 50 to 140 nm.

Anion-exchange group content in the hybrid sorbent - 8.95 mmol/g.

Iron(III) content in the hybrid sorbent - 71 mg/g.

Sorption capacity for As(V) - 42 mg/g (at pH 7).

Sorption capacity for As(III) - 36 mg/g (at pH 7).

Removal kinetics for As(V) - semi-sorption time 1.5 minutes.

Removal kinetics for As(III) - semi-sorption time 4 minutes.

Sorption capacity for Cr(VI) - 295 mg/g (at pH 7).

Sorption capacity for Cu - 265 mg/g.

Sorption capacity for Pb - 200 mg/g.

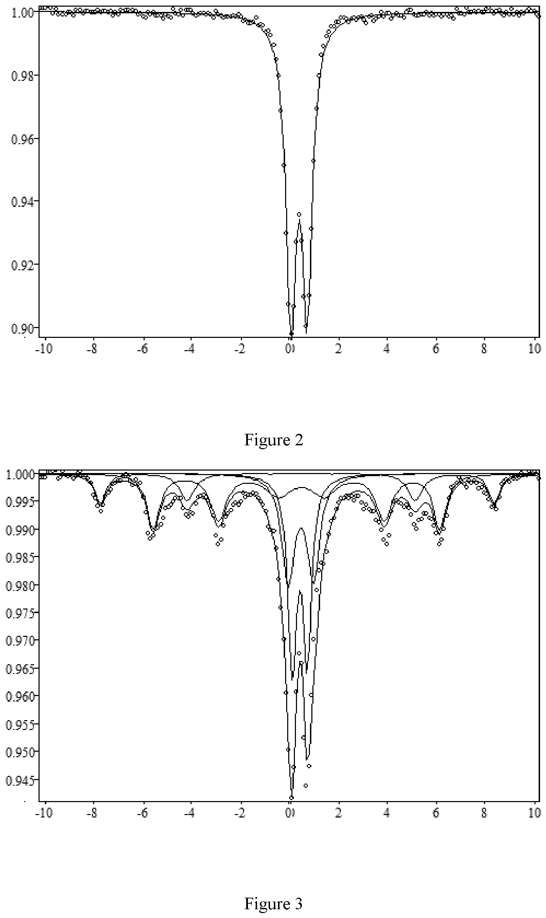

The HFO type in the hybrid sorbent phase, described in examples 1 to 3 was determined by Mossbauer spectroscopy and is given in figure 2.

Mossbauer spectrum of the hybrid sorbent on the base of anion-exchange polymeric PAN-fiber with HFO of example 1 is given in figure 2. From the spectrum one can see that HFO in the hybrid sorbent sample of example 1, produced according to the claimed method, has more that 90% of ferrihydrite Fe₂O₃•3FeO(OH)-3H₂O.

Also, the HFO type of hybrid sorbent sample of US Patent No. 7,291,578 (the closest analogue) was determined by Mossbauer spectroscopy (figure 3). The spectrum shows that HFO consists of magnetic crystalline particles, including 23% wustite FeO, 28% ferrihydrite Fe₂O₃•3FeO(OH)•3H₂O, 13% hematite α-Fe₂O₃ and 36% lepidocrocite γ-FeO(OH).

From the information given above it is seen that HFO in the hybrid sorbent sample comprises 90% of amorphous ferrihydrite. At the same time, the hybrid sorbent of the closest analogue US Patent No. 7,291,578 comprises 28% ferrihydrite. This one more consolidates sorption abilities of invention in comparison to closest analogue.

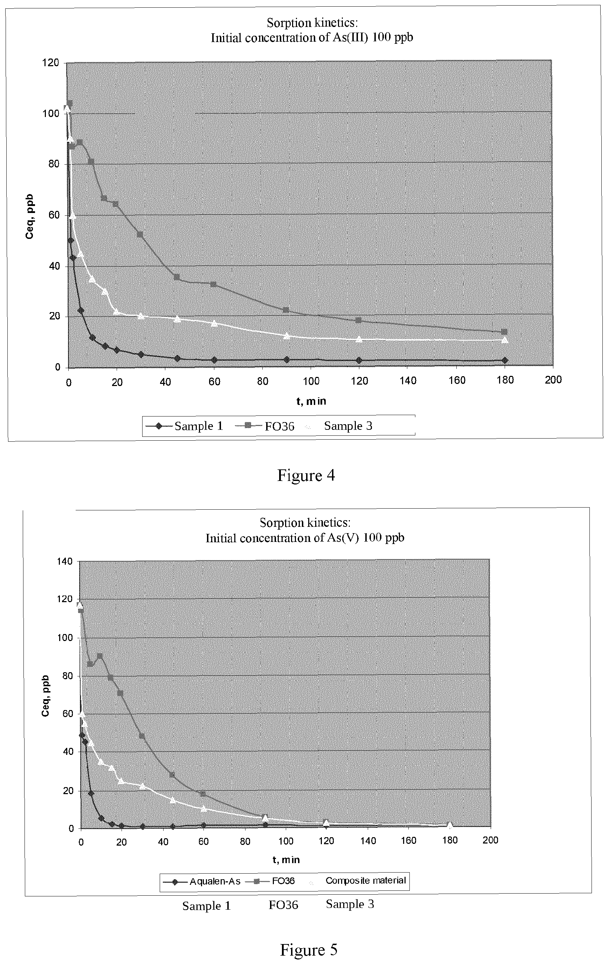

The sorption kinetic diagram for arsenic As(III) by the hybrid sorbent on the base of PAN-fiber with HFO, described in example 1, the sorption kinetic diagram for arsenic As(III) by hybrid sorbent on the base of mixture of PAN-fiber and ion-exchange resin, described in example 3, and also the sorption kinetic diagram for arsenic As(III) by hybrid sorbent FO36 of US Patent No. 7,291,578, chosen as the closest analogue, are depicted in figure 4.

The sorption kinetic diagram for arsenic As(V) by the hybrid sorbent on the base of PAN-fiber with HFO, described in example 1, the sorption kinetic diagram for arsenic As(V) by the hybrid sorbent on the base of mixture of PAN-fiber and ion-exchange resin, described in example 3, and also the sorption kinetic diagram for arsenic As (V) by hybrid sorbent FO36 of US Patent No. 7,291,578, chosen as the closest analogue, are depicted in figure 5.

From the diagrams depicted in figures 4 and 5 it is obvious that the hybrid sorbent with HFO on the base of PAN-fiber, described in example 1 of the invention, has the highest sorption kinetics for arsenic As(III) and As(V); particularly: kinetics of 50-percent sorption for As(III) is 1 minute, kinetics of 50-percent sorption for As(V) is less than 1 minute. Sorption kinetics for As(III) and As(V) of the hybrid sorbent on the base of a mixture of PAN-fiber and ion-exchange resin, described in example 3, is lower: kinetics of 50-percent sorption for As(III) is 4 minutes and kinetics of 50-percent sorption for As(V) is less 1.5 minutes. At the same time, the hybrid sorbent of US Patent No. 7,291,578, chosen by the applicant as the closest analogue, has sorption kinetics less than the hybrid sorbent in example 3, particularly 50-percent sorption kinetics for ions As(III) - 30 minutes and for As(V) - 25 minutes.

Comparative analysis of the hybrid sorbent of the closest analogue (US Patent No. 7,291,578) and the claimed hybrid sorbent with HFO is given in table 1.

The sorption kinetics for As(III) was determined with sodium meta arsenite NaAsO₂, and the sorption capacity for As(V) was determined with 12-aqua sodium orto arsenate Na₃AsO₄•12H₂O.

**Table 1. Comparative analysis of the hybrid sorbent of the closest analogue (US Patent No. 7,291,578) and the claimed hybrid sorbent with HFO.**

| Material | Closest analogue US-7,291,578 | Claimed |
|---|---|---|
| Iron content in hybrid sorbent, mg/g | 35-60 | 60-110 |
| HFO type in sorbent phase | 23% wustite 28% ferrihydrate 13% hematite 35% lepidocrocite | >90% ferrihydrate |
| | crystalline structure prevails | amorphous structure |
| Necessity of mechanical grinding of HFO units HFO | - | - |
| Sorption kinetics for As(V), mg/g | 22 | 32 |
| Sorption capacity for As(III), mg/g | 17 | 30 |
| Kinetics 50% removal As(V)/As(III), minutes | 25/30 | <1/1 |
| Sorption capacity for Cr (VI), mg/g | - | 250 |
| Sorption capacity for Cu, mg/g | | 250 |
| Sorption capacity for Pb, mg/g | | 360 |
| Suggested linear velocity of water filtration, m/h | 30 | 130 |
| Minimal height of sorbent layer in column, mm | 1000 | 100 |

As can be seen from the data indicated in table 1, sorption capacity of the claimed hybrid sorbent far exceeds the sorption capacity of hybrid sorbent of the closest analogue (US Patent No. 7,291,578), and also that of the sorbents, described in state of the art. It is explained, that in the hybrid sorbent with HFO according to the present invention, the amorphous ferrihydrate fraction in HFO exceeds 90%. As ferrihydrate functional groups due to the amorphous structure are more available for anions, containing arsenic As(III) and As(V), than structures of crystalline magnetic HFO in the hybrid sorbents in the state of the art, they have the highest sorption activity for As(III) and As(V) ions, as well as for different ions of heavy metals such as Cr(VI), Cu and Pb.

As can be seen from the information indicated above from the complex of compounds of HFO, only the amorphous ferrihydrate Fe₂O₃•3FeO(OH)•3H₂O has the highest sorption activity for both arsenic ions As(III) and As(V), and such a hybrid sorbent is additionally capable for sorbing different ions of heavy metals. The given comparative analysis prove that the claimed hybrid sorbent with HFO, in which HFO contains more than 90% of amorphous ferrihydrite is highly active and is a stable sorbent for ions of both arsenic As(III) and As(V).

In the description of the invention the preferable embodiment is given. The invention may be changed, but within the limits of the present claims. This gives the possibility of its common use.

## Claims

1. A hybrid sorbent based on an anion-exchange polymeric matrix with HFO for selective sorption of arsenic, **characterized in that** HFO is present in the matrix as particles, the majority of which is amorphous ferrihydrite and the portion of the amorphous ferrihydrite is not less than 80%, preferably is more than 90% of the total mass of HFO.

2. The hybrid sorbent as described in claim 1, **characterized in that** HFO particles have microporous structure and their size ranges from 5 to 500 nm.

3. The hybrid sorbent as described in claim 1, **characterized in that** the polymeric matrix is macroporous fiber and/or granulated material.

4. The hybrid sorbent as described in claim 1, **characterized in that** the anion-exchange content in the polymeric matrix is not less than 6.0 mmol/g.
